# EUROPÄISCHE PATENTSCHRIFT

(11) **EP 3 051 312 B1**
(45) Veröffentlichungstag und Bekanntmachung des Hinweises auf die Patenterteilung: **05.05.2021**
(21) Anmeldenummer: 16152224.8
(22) Anmeldetag: 21.01.2016
(51) Int. Cl.: G01S 17/48, G01S 7/481

(54) **TRIANGULATIONSLICHTTASTER**
TRIANGULATION SENSOR
CAPTEUR PHOTOELECTRIQUE TRIGONOMETRIQUE

(30) Priorität: 02.02.2015 DE 102015101471
(43) Veröffentlichungstag der Anmeldung: 03.08.2016
(73) Patentinhaber: SICK AG, 79183 Waldkirch (DE)
(72) Erfinder: Schug, Hendrik, 70188 Stuttgart (DE); Gerhard, Merettig, 79350 Sexau (DE)
(74) Vertreter: Manitz Finsterwald Patent- und Rechtsanwaltspartnerschaft mbB

(56) Entgegenhaltungen:
- EP-A1- 1 816 488
- EP-A2- 1 134 595
- EP-A2- 1 821 120
- DE-A1-102007 004 632

## Beschreibung

Die Erfindung betrifft einen Triangulationslichttaster mit einem Lichtsender zum Aussenden von Sendelicht in eine Detektionszone, einem ein Array von Empfangselementen aufweisenden Lichtempfänger zum Empfangen von Licht aus der Detektionszone, welches von einem zu detektierenden Objekt remittiert wird, wobei die Empfangselemente jeweilige Empfangssignale erzeugen, einer im Strahlengang zwischen Detektionszone und Lichtempfänger angeordneten Empfangsoptik, welche mehrere Abbildungselemente zum Erzeugen von jeweiligen zueinander beabstandeten Einzellichtflecken aus dem remittierten Licht auf dem Lichtempfänger aufweist, wobei die Abbildungselemente in einem sich zumindest in einer Triangulationsrichtung erstreckenden Array angeordnet sind, und wobei sich die Positionen der Einzellichtflecke auf dem Lichtempfänger in der Triangulationsrichtung in Abhängigkeit von der Entfernung des Objekts ergeben, und einer Auswerteeinheit zum Erzeugen eines Erfassungssignals aus den Empfangssignalen auf der Grundlage der Positionen der Einzellichtflecke auf dem Lichtempfänger.

Es ist bekannt, die Anwesenheit und/oder Entfernung von Gegenständen in einem Überwachungsbereich mit Lichttastern zu bestimmen, die nach dem Triangulationsprinzip arbeiten. Ein derartiger Triangulationslichttaster umfasst einen Lichtsender, beispielsweise eine Leuchtdiode oder einen Laser, und gegebenenfalls eine Sendeoptik, um einen Sendelichtstrahl in eine Detektionszone zu einem dort gegebenenfalls befindlichen, zu detektierenden Objekt auszusenden. Das Sendelicht kann von einem solchen Objekt remittiert, d.h. diffus oder spiegelnd reflektiert, und von einem Lichtempfänger detektiert werden, der zusammen mit einer Empfangsoptik eine Empfangseinheit bildet. Der Lichtempfänger besteht bei bekannten Lösungen aus wenigstens einer Zeile von fotosensitiven Empfangselementen.

In Abhängigkeit von der Entfernung zwischen dem Triangulationslichttaster und dem remittierenden Objekt ändert sich die Position eines durch das remittierte Licht erzeugten Lichtflecks auf dem Lichtempfänger in der sogenannten Triangulationsrichtung. Zwischen dem Auftreffpunkt auf dem Lichtempfänger und der Entfernung des erfassten Objekts besteht ein eindeutiger geometrischer Zusammenhang. Durch Auswertung der Lichtverteilung auf dem Lichtempfänger kann damit die Entfernung zwischen Objekt und Lichttaster bestimmt werden. Weiterhin kann bei entsprechender Auswertung der Lichtverteilung auf dem Lichtempfänger bestimmt werden, ob sich ein Objekt innerhalb oder außerhalb eines Tastbereichs befindet, d.h. ob die Entfernung des Objekts innerhalb oder außerhalb einer vorbestimmten, auch als Tastweite bezeichneten Grenze liegt.

Um insbesondere eine hohe Genauigkeit bei der Entfernungsbestimmung zu erreichen, muss ein solcher Lichtempfänger eine Vielzahl fotosensitiver Empfangselemente aufweisen, die in der Triangulationsrichtung nebeneinander angeordnet sind.

Bei Triangulationslichttastern mit Hintergrundausblendung umfasst der Lichtempfänger wenigstens zwei Empfangselemente, wobei ein sogenanntes Nahelement derart angeordnet ist, dass es von einem Lichtstrahl getroffen wird, wenn er von einem Objekt reflektiert wird, das sich innerhalb eines Nahbereichs vor dem Triangulationslichttaster befindet, und ein sogenanntes Fernelement derart angeordnet ist, dass es von einem Lichtstrahl getroffen wird, der von einem Objekt reflektiert wird, das sich in einem Fernbereich vor dem Triangulationslichttaster befindet. Der Fernbereich ist dabei definitionsgemäß weiter von dem Triangulationstaster entfernt als der Nahbereich. Zur Signalauswertung wird eine Differenz zwischen den Fotodiodenströmen der Empfangselemente dieser beiden Bereiche gebildet.

Um eine größtmögliche Detektionssicherheit zu gewährleisten, wird sowohl eine hohe Empfindlichkeit, um auch schwach remittierende Objekte sicher zu detektieren, als auch eine hohe Ortsauflösung angestrebt. Weiterhin ist es wünschenswert, für platzkritische Anwendungen die Baugröße des Triangulationslichttasters zu minimieren.

Die Leistungsfähigkeit des Lichttasters wird insbesondere durch die Schnittweite, d.h. den Abstand zwischen der Empfangsoptik und dem Lichtempfänger, den Durchmesser des oder der Lichtflecke auf dem Lichtempfänger und den Durchmesser des oder der Abbildungselemente der Empfangsoptik bestimmt, wobei diese drei genannten Größen in einem Zusammenhang stehen. So muss im Allgemeinen mit abnehmender Schnittweite auch der Abbildungselementdurchmesser sinken, um einen möglichst kleinen Lichtfleckdurchmesser auf dem Lichtempfänger zu gewährleisten, was sich wiederum nachteilig auf die empfangene Lichtenergiemenge und damit auf die Empfindlichkeit auswirkt. Akzeptiert man einen größeren Lichtfleckdurchmesser, um mehr Energie auf den Lichtempfänger zu leiten, sinkt die Ortsauflösung und damit die Güte der Hintergrundausblendung.

Es ist bekannt, zur Steigerung der Lichtempfindlichkeit ohne Beeinträchtigung der Ortsauflösung eine Empfangsoptik zu verwenden, die mehrere Abbildungselemente aufweist, die in einer sich in Triangulationsrichtung erstreckenden Reihe angeordnet sind. Die Abbildungselemente erzeugen jeweilige Einzellichtflecke auf dem Lichtempfänger, wobei deren Positionen auf dem Lichtempfänger beispielsweise mit Hilfe einer Mustererkennung ausgewertet werden können. Eine solche Lösung ist in DE 10 2007 004 632 A1 beschrieben.

Für die Durchführung einer solchen Mustererkennung ist jedoch eine relativ aufwändige Auswerteeinheit erforderlich, da hierfür komplexe Rechenoperationen durchgeführt werden müssen.

In EP 1 816 488 A1 ist ein Triangulationslichttaster mit Hintergrundausblendung beschrieben, welcher einen Empfänger mit zeilenförmig angeordneten Empfangselementen umfasst. Mithilfe eines Schaltnetzwerks können die Empfangselemente wahlweise zu einem Nahbereich und einem Fernbereich zusammengeschaltet werden.

DE 10 2008 014 912 A1 zeigt einen Triangulationslichttaster, bei dem der Lichtfleck quer zu der Triangulationsrichtung aufgeweitet ist.

Aus EP 1 134 595 A2 ist ein ein Triangulationslichttaster mit zwei Detektoren bekannt, denen jeweils eine Sammeloptik zugeordnet ist und die auf unterschiedliche Erfassungsweiten eingestellt sind.

Es ist die Aufgabe der Erfindung, einen Triangulationslichttaster anzugeben, der bei hoher Empfindlichkeit und guter Ortsauflösung eine einfache und kostengünstige Auswertung der Empfangssignale zur Erzeugung des Erfassungssignals ermöglicht.

Die Lösung erfolgt durch einen Triangulationslichttaster mit den Merkmalen des Anspruchs 1. Erfindungsgemäß ist vorgesehen, dass einem jeweiligen Abbildungselement ein mehrere benachbarte Empfangselemente umfassender Detektionsbereich zugeordnet ist, wobei jeder Detektionsbereich zumindest in einen ersten und einen zweiten Teilbereich unterteilt ist, wobei eine jeweilige Grenze zwischen dem ersten und dem zweiten Teilbereich einer Position eines von dem zugeordneten Abbildungselement erzeugten Einzellichtflecks für ein Objekt entspricht, welches sich in einer vorgegebenen Referenzentfernung von dem Triangulationslichttaster befindet, und dass die Auswerteeinheit dazu ausgelegt ist, das Erfassungssignal auf der Grundlage einer Differenz zwischen den zusammengefassten Empfangssignalen der den ersten Teilbereichen zugeordneten Empfangselemente und den zusammengefassten Empfangssignalen der den zweiten Teilbereichen zugeordneten Empfangselemente zu erzeugen.

Wenn sich ein Objekt innerhalb der Detektionszone befindet, trifft von diesem Objekt remittiertes Sendelicht innerhalb der jeweiligen Detektionsbereiche auf den Lichtempfänger. Wenn sich das Objekt in der auch als Tastweite bezeichneten Referenzentfernung von dem Triangulationslichttaster befindet, definiert der jeweilige Auftreffort eines Einzellichtflecks auf dem Lichtempfänger die Grenze zwischen dem ersten und dem zweiten Teilbereich dieses Detektionsbereichs. Eine jeweilige Grenze zwischen dem ersten Teilbereich und dem zweiten Teilbereich entspricht dabei weitestgehend der Position eines von dem zugeordneten Abbildungselement erzeugten Einzellichtflecks für ein Objekt, welches sich in einer vorgegebenen Referenzentfernung von dem Triangulationstaster befindet. Im Schaltpunkt entspricht die Lichtfleckposition genau der Grenze zwischen den Teilbereichen.

Ist der Abstand des Objekts kleiner bzw. größer als die Referenzentfernung, fallen die Einzellichtflecke zumindest überwiegend in die ersten Teilbereiche bzw. zumindest überwiegend in die zweiten Teilbereiche. Somit korrespondieren die ersten Teilbereiche der Detektionsbereiche mit einem jeweiligen Nahbereich der Detektionszone und die zweiten Teilbereiche der Detektionsbereiche mit einem jeweiligen Fernbereich der Detektionszone bzw. - in Abhängigkeit von der Definition - auch umgekehrt.

Die jeweiligen Detektionsbereiche und damit auch deren Teilbereiche sind für sich zusammenhängend. Es ist jedoch möglich, dass zwischen zwei benachbarten Detektionsbereichen ein oder mehrere Empfangselemente vorhanden sind, die keinem Detektionsbereich zugeordnet sind und für die Erzeugung des Erfassungssignals ungenutzt bleiben können. Die Referenzentfernung für alle Grenzen zwischen den jeweiligen Teilbereichen ist die gleiche. Die Größe der Detektionsbereiche und/oder der Teilbereiche kann variieren.

Unter einem Array von Empfangselementen bzw. Abbildungselementen werden Anordnungen verstanden, die eindimensional, d.h. zeilenförmig, oder auch zweidimensional sein können, wobei in der Regel die Anzahl von Elementen in der Triangulationsrichtung wesentlich größer ist als in der Querrichtung.

In vorliegenden Text wird der Begriff "Detektionszone" für eine Zone verwendet, in der sich ein zu detektierendes Objekt aufhält bzw. aufhalten kann, wobei die Detektionszone einen Nah- und einen Fernbereich umfassen kann. Der Begriff "Detektionsbereich" bezeichnet einen mehrere Empfangselemente umfassenden und in Teilbereiche unterteilten Bereich des Empfangselementes.

Die Erfindung ist nicht nur auf Detektionsbereiche mit zwei Teilbereichen beschränkt ist, sondern kann grundsätzlich auch drei oder mehr Teilbereiche umfassen.

Der erfindungsgemäße Triangulationslichttaster ermöglicht es, die Lichtenergie, die in den mehreren, durch die Abbildungselemente erzeugten Einzellichtflecken vorhanden ist, auf einfache Weise elektronisch zu bündeln, so dass sich die erfasste Energie erhöht und damit auch der Signal/Rauschabstand vergrößert, ohne dass es einer aufwändigen Auswerteschaltung bedarf.

Bei der Erfindung ist die Auswerteeinheit außerdem dazu ausgelegt, ein Summensignal aus den Empfangssignalen der Empfangselemente zu ermitteln, wobei die Empfangssignale der den ersten Teilbereichen zugeordneten Empfangselemente mit einem ersten Faktor und die Empfangssignale der den zweiten Teilbereichen zugeordneten Empfangselemente mit einem zweiten Faktor, der sich von dem ersten Faktor zumindest bezüglich seines Vorzeichens unterscheidet, gewichtet werden. Weiterhin ist die Auswerteeinheit dazu ausgelegt, das Erfassungssignal auf der Grundlage des Summensignals zu erzeugen.

Im einfachsten Fall weisen beide Faktoren den Betrag 1 auf, so dass beispielsweise die Empfangssignale der den ersten Teilbereichen zugeordneten Empfangselemente positiv und die Empfangssignale der den zweiten Teilbereichen zugeordneten Empfangselemente negativ gewichtet werden. In diesem Beispielsfall führt ein Objekt, dessen Abstand genau gleich der Referenzentfernung oder Tastweite ist, zu einem Summensignal mit der Größe Null. Treffen die Einzellichtflecke vollständig oder zumindest zum größeren Teil auf die ersten Teilbereiche, so ist das Summensignal positiv, treffen sie hingegen vollständig oder zum größeren Teil auf die zweiten Teilbereiche, ist das Summensignal negativ. Durch eine entsprechende Auswertung des Summensignals kann somit insbesondere festgestellt werden, ob sich das detektierte Objekt in einem Nahbereich, in einem Fernbereich oder genau im Abstand der Tastweite befindet.

Gemäß einer vorteilhaften Ausführungsform weist die Auswerteeinheit wenigstens eine Addiervorrichtung auf, welche zum Ermitteln des oder der Summensignale aus den Empfangssignalen ausgelegt ist. Derartige Addiervorrichtungen sind zu einer einfachen und kostengünstigen Ermittlung des oder der Summensignale geeignet. Je nachdem, welche der oben erwähnten Varianten der Summensignalbildung gewählt ist, sind eine oder zwei Addiervorrichtungen vorgesehen.

Erfindungsgemäß ist die Auswerteeinheit außerdem dazu ausgelegt, eine Zuordnung der Empfangselemente zu einem jeweiligen Detektionsbereich und/oder zu einem jeweiligen Teilbereich mittels eines Einlernvorgangs, bei dem ein Objekt in der gewünschten Referenzentfernung angeordnet wird, und/oder auf der Grundlage einer Zuordnungstabelle oder Zuordnungsfunktion in Abhängigkeit von der Referenzentfernung durchzuführen. Dadurch ist es möglich, den Triangulationslichttaster für unterschiedliche Tastweiten einzusetzen, da die Zuordnung der Empfangselemente zu den Detektionsbereichen bzw. Teilbereichen variabel ist. Bevorzugt ist sowohl die Zuordnung der Empfangselemente zu einem bestimmten Abbildungselement, d.h. die Definition der Detektionsbereiche, als auch die Definition der Grenzen zwischen den ersten und zweiten Teilbereichen variabel.

Bei der Zuordnung der Empfangselemente können die verschiedenen Methoden beliebig kombiniert werden. So kann zum Beispiel die Zuordnung zu den Detektionsbereichen über eine Zuordnungstabelle oder Zuordnungsfunktion erfolgen, während die Grenzen, d.h. die Zuordnung zu einem jeweiligen Teilbereich, mittels eines Einlernvorgangs erfolgt.

Beispielsweise ist es aber auch möglich, dass die Zuordnung zu einem jeweiligen Detektionsbereich fest vorgegeben ist und lediglich die Zuordnung zu einem der Teilbereiche nach einer der genannten Methoden durchgeführt wird.

Schließlich kann sowohl die Zuordnung zu den Detektionsbereichen als auch zu den Teilbereichen fest vorgegeben sein, wodurch sich die Auswerteeinheit besonders einfach ausgestalten lässt.

Gemäß einer weiteren vorteilhaften Ausführungsform ist vorgesehen, dass die Abbildungselemente derart ausgestaltet sind, dass der Durchmesser der von ihnen auf den Lichtempfänger erzeugten Einzellichtflecke in der Triangulationsrichtung kleiner ist als in der hierzu orthogonalen Richtung. Hierfür können z.B. Linsen mit nicht-runder Apertur, aber auch astigmatische Linsen oder torische Linsen verwendet werden. Dadurch kann eine bessere Lichtausbeute ohne Verschlechterung der Ortsauflösung in Triangulationsrichtung erzielt werden.

Bei der Erfindung sind außerdem die Abbildungselemente durch einen lichtundurchlässigen Trennsteg voneinander getrennt, der sich zwischen der Empfangsoptik und dem Lichtempfänger erstreckt und somit verhindert, dass ein durch eines der Abbildungselemente hindurchtretender Lichtstrahl auf einen Detektionsbereich trifft, welcher nicht diesem Abbildungselement zugeordnet ist.

Zusätzlich kann dazu auch vorgesehen sein, dass zwischen den den einzelnen Abbildungselementen zugeordneten Detektionsbereichen ein Abstand vorgesehen ist.

Weitere vorteilhafte Ausführungsformen sind in den Unteransprüchen, der Beschreibung und der Zeichnung angegeben.

Die Erfindung wird nachfolgend anhand eines Ausführungsbeispiels mit Bezug auf die Zeichnung beschrieben. In dieser zeigen:
- Fig. 1: eine schematische Darstellung eines erfindungsgemäßen Triangulationslichttasters gemäß einem Ausführungsbeispiel,
- Fig. 2: eine Detaildarstellung des Triangulationslichttasters von Fig. 1, und
- Fig. 3: weitere schematische Darstellungen des Triangulationslichttasters von Fig. 1 und 2 einschließlich zugehöriger Signalverläufe für Objekte in unterschiedlicher Entfernung zum Triangulationslichttaster in kombinierter Darstellung.

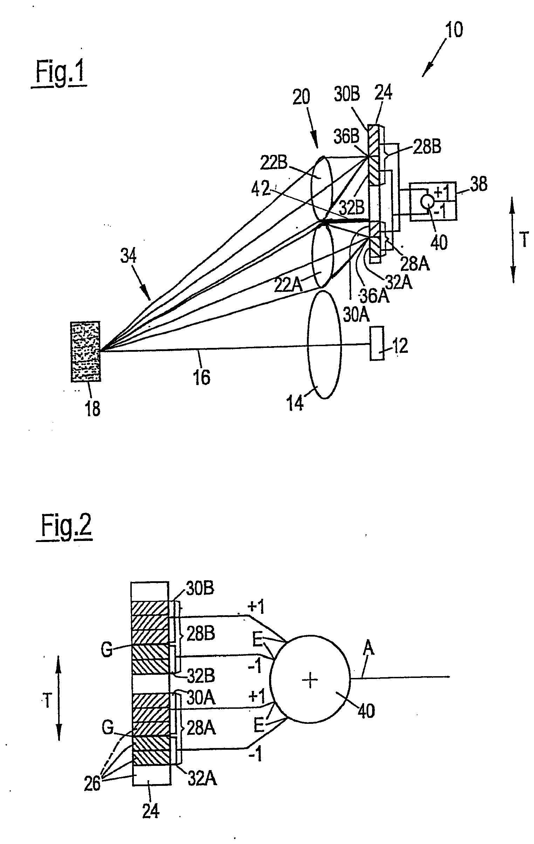

Fig. 1 zeigt den schematischen Strahlengang eines erfindungsgemäßen Triangulationslichttasters 10.

Von einem Lichtsender 12, beispielsweise einer Laserdiode, wird Sendelicht 16 in Richtung einer Detektionszone ausgesendet. Eine Sendeoptik 14 formt das Sendelicht 16 erforderlichenfalls zu einem parallelen Strahlenbündel. Das Sendelicht 16 trifft auf ein Objekt 18 in der Detektionszone und wird von diesem Objekt 18 zum Triangulationslichttaster 10 remittiert. Das remittierte Licht 34 trifft auf eine Empfangsoptik 20, welche mehrere linsenförmige Abbildungselemente 22A, 22B umfasst, die in Triangulationsrichtung T nebeneinander angeordnet sind.

Die Abbildungselemente 22A, 22B bündeln das remittierte Licht 34 in jeweilige Einzellichtflecke 36A, 36B, welche von einem Lichtempfänger 24 detektiert und in elektrische Empfangssignale umgewandelt werden. Der als Empfangszeile ausgestaltete Lichtempfänger 24 weist eine Vielzahl von Empfangselementen 26 (Fig. 2) auf, welche ebenfalls in Triangulationsrichtung T nebeneinander angeordnet sind.

Jedem Abbildungselement 22A, 22B ist ein jeweiliger Detektionsbereich 28A, 28B des Lichtempfängers 24 zugeordnet, wobei jeder Detektionsbereich 28A, 28B mehrere Empfangselemente 26 umfasst (Fig. 2).

Die Abbildungselemente 22A, 22B sind durch einen lichtundurchlässigen Trennsteg 42 (Fig. 1) voneinander getrennt, der sich derart zwischen der Empfangsoptik 20 und dem Lichtempfänger 24 erstreckt, dass verhindert wird, dass ein durch eines der Abbildungselemente 22A, 22B hindurchtretender Lichtstrahl auf einen Detektionsbereich 28A, 28B trifft, welcher nicht diesem Abbildungselement 22A, 22B zugeordnet ist. Mit anderen Worten verhindert der Trennsteg 42, dass durch das Abbildungselement 22A hindurchtretendes Licht auf den Detektionsbereich 28B bzw. durch das Abbildungselement 22B hindurchtretendes Licht auf den Detektionsbereich 28A gelangt. Der Trennsteg 42 steht im vorliegenden Ausführungsbeispiel senkrecht zu dem Lichtempfänger 24, kann aber auch diesem gegenüber geneigt sein.

Alternativ oder zusätzlich zu dem Trennsteg 42 kann dazu auch vorgesehen sein, dass zwischen den den einzelnen Abbildungselementen 22A, 22B zugeordneten Detektionsbereichen 28A, 28B ein Abstand vorgesehen ist, wie es zum Beispiel in den Fig. 1 und 2 angedeutet ist.

Die von den Empfangselementen 26 erzeugten Empfangssignale werden an eine Auswerteeinheit 38 übermittelt, welche auf der Grundlage der Positionen des Einzellichtflecke 36A, 36B auf dem Lichtempfänger 24 ein Erfassungssignal erzeugt.

Beim beschriebenen Ausführungsbeispiel weist die Empfangsoptik 20 der einfachen Darstellung wegen lediglich zwei Abbildungselemente 22A, 22B auf. Dementsprechend sind auf dem Lichtempfänger 24 auch nur zwei Detektionsbereiche 28A, 28B definiert. Tatsächlich kann die Anzahl der Abbildungselemente sowie dementsprechend die Anzahl der Detektionsbereiche wesentlich größer sein und beispielsweise 5, 10 oder 20 betragen. Entsprechend sind die Abbildungselemente und Detektionsbereiche voneinander durch jeweilige Trennstege voneinander getrennt. Der Lichtempfänger 24 kann anstelle der in Fig. 2 dargestellten dreizehn Empfangselemente 26 ebenfalls eine wesentlich höhere Anzahl an Empfangselementen aufweisen. Beispielsweise kann der Lichtempfänger 128 in einer Zeile angeordnete Empfangselemente aufweisen.

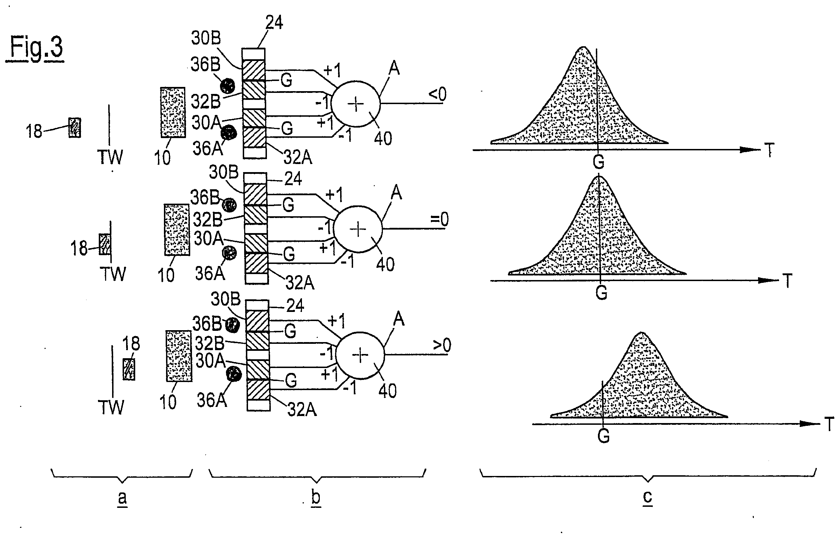

Jeder Detektionsbereich 28A, 28B ist jeweils in einen ersten Teilbereich 30A bzw. 30B und ein einen zweiten Teilbereich 32A bzw. 32B unterteilt. Die Grenze G zwischen den Teilbereichen 30A und 32A bzw. 30B und 32B ist so gewählt, dass die Einzellichtflecke 36A, 36B auf die jeweilige Grenze zwischen dem ersten Teilbereich 30A, 30B und dem zweiten Teilbereich 32A, 32B trifft, wenn der Abstand des remittierenden Objekts 18 vom Triangulationslichttaster 10 genau einer vorgegebenen Tastweite TW oder Referenzentfernung entspricht (siehe Fig. 3 mitte).

Wenn der Abstand des Objekts 18 vom Triangulationslichttaster 10 kleiner ist als die Tastweite TW, sich das Objekt 18 also in einem sogenannten Nahbereich befindet, treffen die Einzellichtflecke 36A, 36B zumindest überwiegend innerhalb der jeweiligen ersten Teilbereiche 30A, 30B auf den Lichtempfänger 24 (siehe Fig. 3 unten).

Wenn hingegen der Abstand des Objekts 18 vom Triangulationslichttaster 10 größer als die Tastweite TW ist, sich das Objekt 18 also in einem sogenannten Fernbereich befindet, treffen die Einzellichtflecke 36A, 36B zumindest überwiegend innerhalb der jeweiligen zweiten Teilbereiche 32A, 32B auf den Lichtempfänger 24 (siehe Fig. 3 oben).

Wie in Fig. 1 bis 3 zu erkennen ist, befinden sich zwischen den Detektionsbereichen 28A, 28B sowie in der gewählten Darstellung oberhalb des Detektionsbereichs 28B und unterhalb des Detektionsbereichs 28A Bereiche des Lichtempfängers 24, die keinem Detektionsbereich 28A, 28B zugeordnet sind und somit auch bei der Berechnung des Summensignals nicht berücksichtigt werden.

Sowohl die Detektionsbereiche 28A, 28B als auch die ersten und zweiten Teilbereiche 30A, 30B, 32A, 32B können in Abhängigkeit von ihrer Position auf dem Lichtempfänger 24 geometriebedingt unterschiedliche Größen aufweisen, da Einzellichtflecke 36A, 36B, die weiter von der durch das Sendelicht 16 definierten Achse entfernt sind, bei gleicher Änderung des Objektabstandes eine größere Positionsänderung erfahren.

Die Zuordnung der Empfangselemente 26 zu den jeweiligen Detektionsbereichen 28A, 28B und den jeweiligen Teilbereichen 30A, 30B, 32A, 32B kann z.B. mittels eines Einlernvorgangs erfolgen. Zur Festlegung der Detektionsbereiche 28A, 28B kann beispielsweise das Objekt in einem maximalen und einem minimalen Abstand zum Triangulationslichttaster 10 positioniert werden und die jeweiligen Auftreffpositionen der Einzellichtflecke auf dem Lichtempfänger, welche die Begrenzungen der Detektionsbereiche darstellen, ausgewertet werden. Die Zuordnung zu den jeweiligen Teilbereichen 30A, 30B, 32A, 32B kann dadurch erfolgen, dass das Objekt in der gewünschten Tastweite TW positioniert wird, wobei dann die Auftrefforte der Einzellichtflecke 36A, 36B auf dem Lichtempfänger 24 die jeweiligen Grenzen zwischen den ersten Teilbereichen 30A, 30B und den zweiten Teilbereichen 32A, 32B definiert.

Alternativ kann auch die Zuordnung zu den Detektionsbereichen 28A, 28B und/oder den Teilbereichen 30A, 30B, 32A, 32B mit Hilfe einer Zuordnungstabelle und/oder einer Zuordnungsfunktion erfolgen, wobei die Zuordnungstabelle und/oder die Zuordnungsfunktion experimentell und/oder auf der Grundlage von geometrischen Berechnungen erstellt werden können.

In Fig. 1 bis 3 umfasst die Auswerteeinheit 38 eine Addiervorrichtung 40, welche mehrere Eingänge E und einen Ausgang A aufweist (Fig. 2 und 3). Jedes Empfangselement 26 ist mit einem Eingang E der Addiervorrichtung 40 verbunden, wobei sich zwischen dem jeweiligen Empfangselement und der Addiervorrichtung eine Verknüpfungseinheit befindet (nicht dargestellt), welche in Abhängigkeit von der Zuordnung der Empfangselemente 26 zu den Detektionsbereichen 28A, 28B und den Teilbereichen 30A, 30B ,32A, 32B die Empfangssignale mit einem Faktor gewichten oder auch unterbrechen kann. Aus Gründen der Übersichtlichkeit ist in Fig. 1 bis 3 für jeden Teilbereich 30A, 30B, 32A, 32B nur eine Verbindungsleitung dargestellt.

Während bei der in der Addiervorrichtung 40 erfolgenden Addition zur Ermittlung des Summensignals die Empfangssignale der ersten Teilbereiche 30A, 30B mit einem Faktor +1 gewichtet werden, werden die Empfangssignale der zweiten Teilbereiche 32A, 32B mit einem Faktor -1 gewichtet. Die Eingänge E der Auswerteeinheit 38 sind entsprechend mit den genannten Faktoren gekennzeichnet. Zur Erläuterung wird darauf hingewiesen, dass bei der Darstellung in Fig. 1 zusätzlich auch die Verbindungen der ersten Teilbereiche 30A, 30B bzw. der zweiten Teilbereiche 32A, 32B zusammengefasst sind.

Im rechten Teil von Fig. 3 ist die von den Einzellichtflecken 36A, 36B erzeugte Lichtverteilung auf einem Detektionsbereich des Lichtempfängers 24 in der Triangulationsrichtung T für die verschiedenen Objektabstände aufgetragen, wobei die Grenze G zwischen den ersten Teilbereichen 30A, 30B und den zweiten Teilbereichen 32A, 32B, die der Position eines Lichtfleckes entspricht, der von einem Objekt in der Tastweite TW remittiert wird, markiert ist.

Die vorstehend beschriebene Verrechnung der Empfangssignale unter Berücksichtigung der Gewichtungsfaktoren bewirkt, dass sich der Signalanteil, der sich links von der Markierung TW befindet, von dem Signalanteil der sich rechts von der Markierung TW befindet, subtrahiert wird.

Wenn sich das Objekt 18 im Fernbereich befindet (Fig. 3 oben), überwiegt der Signalanteil links der Markierung TW und führt zu einem negativen Signal am Ausgang A der Addiervorrichtung 40.

Befindet sich das Objekt 18 in der Tastweite TW (Fig. 3 Mitte), sind die Signalanteile auf beiden Seiten der Markierung TW gleich groß, so dass am Ausgang A ein Signal mit der Größe Null ausgegeben wird.

Falls sich hingegen das Objekt 18 innerhalb des Nahbereichs befindet (Fig. 3 unten), überwiegt der Signalanteil rechts der Markierung TW, so dass am Ausgang A ein positives Summensignal ausgegeben wird.

Somit liefert das Summensignal Informationen über den Abstand des Objekts 18 zum Triangulationslichttaster 10, auf deren Grundlage die Auswerteeinheit 38 ein Erfassungssignal erzeugen kann.

Die beschriebene Fig. 3 ist dabei wie folgt zu verstehen: Die Entfernung des Objektes von dem Triangulationstaster ist in der Darstellung der Fig. 3 oben größer als in Fig. 3 unten. Im Bereich a) der Fig. 3 sind jeweils das Objekt 18 und der Triangulationstaster 10 in ihrer gegenseitigen Lage zueinander gezeigt. Im Bereich b) der Fig. 3 ist jeweils der Lichtempfänger 24 mit der Auswertung gezeigt. Außerdem ist in Bereich b) der Fig. 3 schematisch jeweils durch Punkte angedeutet, wo auf dem Empfänger die Lichtflecke 36A, 36B auftreffen. Die Signalverläufe sind schließlich im Bereich c) der Fig. 3 erkennbar.

### Bezugszeichenliste

- 10: Triangulationslichttaster
- 12: Lichtsender
- 14: Sendeoptik
- 16: Sendelicht
- 18: Objekt
- 20: Empfangsoptik
- 22A, 22B: Abbildungselement
- 24: Lichtempfänger
- 26: Empfangselement
- 28A, 28B: Detektionsbereich
- 30A, 30B: erster Teilbereich
- 32A, 32B: zweiter Teilbereich
- 34: remittiertes Licht
- 36A, 36B: Einzellichtfleck
- 38: Auswerteeinheit
- 40: Addiervorrichtung
- 42: Trennsteg

- E: Eingang
- A: Ausgang
- G: Grenze zwischen zwei Teilbereichen eines Detektionsbereiches
- T: Triangulationsrichtung
- TW: Tastweite

## Patentansprüche

1. Triangulationslichttaster mit
einem Lichtsender (12) zum Aussenden von Sendelicht (16) in eine Detektionszone,
einem ein Array von Empfangselementen (26) aufweisenden Lichtempfänger (24) zum Empfangen von Licht (34) aus der Detektionszone, welches von einem zu detektierenden Objekt (18) remittiert wird, wobei die Empfangselemente (26) jeweilige Empfangssignale erzeugen,
einer im Strahlengang zwischen Detektionszone und Lichtempfänger (24) angeordneten Empfangsoptik (20), welche mehrere Abbildungselemente (22A, 22B) zum Erzeugen von jeweiligen zueinander beabstandeten Einzellichtflecken (36A, 36B) aus dem remittierten Licht (34) auf dem Lichtempfänger (24) aufweist, wobei die Abbildungselemente (22A, 22B) in einem sich zumindest in einer Triangulationsrichtung (T) erstreckenden Array angeordnet sind, und wobei sich die Positionen der Einzellichtflecke (36A, 36B) auf dem Lichtempfänger (24) in der Triangulationsrichtung (T) in Abhängigkeit von der Entfernung des Objekts (18) ergeben, und
einer Auswerteeinheit (38) zum Erzeugen eines Erfassungssignals aus den Empfangssignalen auf der Grundlage der Positionen der Einzellichtflecke (36A, 36B) auf dem Lichtempfänger (24),
**dadurch gekennzeichnet,**
**dass** einem jeweiligen Abbildungselement (22A, 22B) ein mehrere benachbarte Empfangselemente (26) umfassender Detektionsbereich (28A, 28B) zugeordnet ist, wobei jeder Detektionsbereich (28A, 28B) zumindest in einen ersten Teilbereich (30A, 30B) und einen zweiten Teilbereich (32A, 32B) unterteilt ist, und wobei eine jeweilige Grenze zwischen dem ersten Teilbereich (30A, 30B) und dem zweiten Teilbereich (32A, 32B) der Position eines von dem zugeordneten Abbildungselement (22A, 22B) erzeugten Einzellichtflecks (36A, 36B) für ein Objekt (18) entspricht, welches sich in einer vorgegebenen Referenzentfernung von dem Triangulationslichttaster (10) befindet,
**dass** die Auswerteeinheit (38) dazu ausgelegt ist, das Erfassungssignal auf der Grundlage einer Differenz zwischen den zusammengefassten Empfangssignalen der den ersten Teilbereichen (30A, 30B) zugeordneten Empfangselemente (26) und den zusammengefassten Empfangssignalen der den zweiten Teilbereichen (32A, 32B) zugeordneten Empfangselemente (26) zu erzeugen,
**dass** die Auswerteeinheit (38) dazu ausgelegt ist, ein Summensignal aus den Empfangssignalen der Empfangselemente (26) zu ermitteln, wobei die Empfangssignale der den ersten Teilbereichen (30A, 30B) zugeordneten Empfangselemente (26) mit einem ersten Faktor und die Empfangssignale der den zweiten Teilbereichen (32A, 32B) zugeordneten Empfangselemente (26) mit einem zweiten Faktor, der sich von dem ersten Faktor zumindest bezüglich seines Vorzeichens unterscheidet, gewichtet werden, und
**dass** die Auswerteeinheit (38) dazu ausgelegt ist, das Erfassungssignal auf der Grundlage des Summensignals zu erzeugen,
**dass** die Auswerteeinheit (38) dazu ausgelegt ist, eine Zuordnung der Empfangselemente (26) zu einem jeweiligen Detektionsbereich (28A, 28B) und/oder zu einem jeweiligen Teilbereich (30A, 30B, 32A, 32B) mittels eines Einlernvorgangs, bei dem ein Objekt (18) in der gewünschten Referenzentfernung angeordnet wird, und/oder auf der Grundlage einer Zuordnungstabelle oder Zuordnungsfunktion in Abhängigkeit von der Referenzentfernung durchzuführen, und
**dass** die Abbildungselemente (22A, 22B) durch einen lichtundurchlässigen Trennsteg (42) voneinander getrennt sind, der sich zwischen der Empfangsoptik (20) und dem Lichtempfänger (24) erstreckt.

2. Triangulationslichttaster nach Anspruch 1,
**dadurch gekennzeichnet,**
**dass** die Auswerteinheit (38) wenigstens eine Addiervorrichtung (40) aufweist, welche zum Ermitteln des oder der Summensignale aus den Empfangssignalen ausgelegt ist.

3. Triangulationslichttaster nach Anspruch 2,
**dadurch gekennzeichnet,**
**dass** die Auswerteinheit (38) dazu ausgelegt ist, die Empfangselemente (26) entsprechend ihrer Zuordnung zu den Teilbereichen (30A, 30B, 32A, 32B) mit der wenigstens einen Addiervorrichtung (40) zusammenzuschalten.

4. Triangulationslichttaster nach einem der vorhergehenden Ansprüche,
**dadurch gekennzeichnet,**
**dass** die Abbildungselemente (22A, 22B) derart ausgestaltet sind, dass der Durchmesser der von ihnen auf dem Lichtempfänger (24) erzeugten Einzellichtflecke (36A, 36B) in der Triangulationsrichtung (T) kleiner ist als in der hierzu orthogonalen Richtung.

## Claims

1. A triangulation light sensor comprising
a light transmitter (12) for transmitting transmission light (16) into a detection zone;
a light receiver (24) having an array of reception elements (26) for receiving light (34) from the detection zone which is remitted by an object (18) to be detected, wherein the reception elements (26) generate respective reception signals;
a reception optics (20) which is arranged in the optical path between the detection zone and the light receiver (24) and which has a plurality of imaging elements (22A, 22B) for generating respective mutually spaced apart individual light spots (36A, 36B) from the remitted light (34) on the light receiver (24), wherein the imaging elements (22A, 22B) are arranged in an array at least extending in a triangulation direction (T), and wherein the positions of the individual light spots (36A, 36B) on the light receiver (24) in the triangulation direction (T) result in dependence on the distance of the object (18); and
an evaluation unit (38) for generating a detection signal from the reception signals on the basis of the positions of the individual light spots (36A, 36B) on the light receiver (24),
**characterized in that**
a detection zone (28A, 28B) comprising a plurality of adjacent reception elements (26) is associated with a respective imaging element (22A, 22B), with each detection zone (28A, 28B) being divided at least into a first part zone (30A, 30B) and a second part zone (32A, 32B), and with a respective boundary between the first part zone (30A, 30B) and the second part zone (32A, 32B) corresponding to the position of an individual light spot (36A, 36B), generated by the associated imaging element (22A, 22B), for an object (18) which is located at a predefined reference distance from the triangulation light sensor (10);
**in that** the evaluation unit (38) is configured to generate the detection signal on the basis of a difference between the combined reception signals of the reception elements (26) associated with the first part zones (30A, 30B) and the combined reception signals of the reception elements (26) associated with the second part zones (32A, 32B);
**in that** the evaluation unit (38) is configured to determine a sum signal from the reception signals of the reception elements (26), with the reception signals of the reception elements (26) associated with the first part zones (30A, 30B) being weighted by a first factor and the reception signals of the reception elements (26) associated with the second part zones (32A, 32B) being weighted by a second factor which differs from the first factor at least with respect to its sign; and
**in that** the evaluation unit (38) is configured to generate the detection signal on the basis of the sum signal; and
**in that** the evaluation unit (38) is configured to carry out an association of the reception elements (26) with a respective detection zone (28A, 28B) and/or with a respective part zone (30A, 30B, 32A, 32B) by means of a teaching process, in which an object (18) is arranged at the desired reference distance, and/or on the basis of an association table or association function in dependence on the reference distance; and **in that** the imaging elements (22A, 22B) are separated from one another by a separation web (42) which is impermeable to light and which extends between the reception optics (20) and the light receiver (24).

2. A triangulation light sensor in accordance with claim 1,
**characterized in that**
the evaluation unit (38) has at least one adding apparatus (40) which is configured to determine the sum signal or sum signals from the reception signals.

3. A triangulation light sensor in accordance with claim 2,
**characterized in that**
the evaluation unit (38) is configured to interconnect the reception elements (26) with the at least one adding apparatus (40) in accordance with their association with the part zones (30A, 30B, 32A, 32B).

4. A triangulation light sensor in accordance with any one of the preceding claims,
**characterized in that**
the imaging elements (22A, 22B) are designed such that the diameter of the individual light spots (36A, 36B) generated by them on the light receiver (24) is smaller in the triangulation direction (T) than in the direction orthogonal thereto.

## Revendications

1. Capteur photoélectrique à triangulation comportant
un émetteur de lumière (12) pour émettre une lumière d'émission (16) dans une zone de détection,
un récepteur de lumière (24) comprenant un réseau d'éléments de réception (26) pour recevoir la lumière (34) provenant de la zone de détection et renvoyée par un objet (18) à détecter, les éléments de réception (26) générant des signaux de réception respectifs,
une optique de réception (20) qui est disposée dans le chemin optique entre la zone de détection et le récepteur de lumière (24) et qui comprend plusieurs éléments d'imagerie (22A, 22B) pour générer des spots lumineux individuels respectifs espacés (36A, 36B) à partir de la lumière renvoyée (34) sur le récepteur de lumière (24), les éléments d'imagerie (22A, 22B) étant disposés dans un réseau s'étendant au moins dans une direction de triangulation (T), et les positions des spots lumineux individuels (36A, 36B) sur le récepteur de lumière (24) dans la direction de triangulation (T) résultant en fonction de la distance de l'objet (18), et
une unité d'évaluation (38) pour générer un signal de détection à partir des signaux de réception sur la base des positions des différents spots lumineux individuels (36A, 36B) sur le récepteur de lumière (24),
**caractérisé en ce que**
une zone de détection (28A, 28B) comprenant plusieurs éléments de réception adjacents (26) est associée à un élément d'imagerie respectif (22A, 22B), chaque zone de détection (28A, 28B) étant subdivisée au moins en une première zone partielle (30A, 30B) et en une seconde zone partielle (32A, 32B), et une limite respective entre la première zone partielle (30A, 30B) et la seconde zone partielle (32A, 32B) correspondant à la position d'un spot lumineux individuel (36A, 36B) généré par l'élément d'imagerie associé (22A, 22B) pour un objet (18) situé à une distance de référence prédéterminée du capteur photoélectrique à triangulation (10),
**en ce que** l'unité d'évaluation (38) est conçue pour générer le signal de détection sur la base d'une différence entre les signaux de réception réunis des éléments de réception (26) associés aux premières zones partielles (30A, 30B) et les signaux de réception réunis des éléments de réception (26) associés aux secondes zones partielles (32A, 32B),
**en ce que** l'unité d'évaluation (38) est conçue pour déterminer un signal de somme à partir des signaux de réception des éléments de réception (26), les signaux de réception des éléments de réception (26) associés aux premières zones partielles (30A, 30B) étant pondérés par un premier facteur, et les signaux de réception des éléments de réception (26) associés aux secondes zones partielles (32A, 32B) étant pondérés par un second facteur qui se distingue du premier facteur au moins par son signe, et
**en ce que** l'unité d'évaluation (38) est conçue pour générer le signal de détection sur la base du signal de somme,
**en ce que** l'unité d'évaluation (38) est conçue pour effectuer une association des éléments de réception (26) à une zone de détection respective (28A, 28B) et/ou à une zone partielle respective (30A, 30B, 32A, 32B) au moyen d'une opération d'apprentissage dans laquelle un objet (18) est disposé à la distance de référence souhaitée, et/ou sur la base d'un tableau d'association ou d'une fonction d'association en fonction de la distance de référence, et
**en ce que** les éléments d'imagerie (22A, 22B) sont séparés les uns des autres par une barrette de séparation opaque (42) s'étendant entre l'optique de réception (20) et le récepteur de lumière (24).

2. Capteur photoélectrique à triangulation selon la revendication 1,
**caractérisé en ce que**
l'unité d'évaluation (38) présente au moins un additionneur (40) qui est conçu pour déterminer le ou les signaux de somme à partir des signaux de réception.

3. Capteur photoélectrique à triangulation selon la revendication 2,
**caractérisé en ce que**
l'unité d'évaluation (38) est conçue pour interconnecter les éléments de réception (26) avec ledit au moins un additionneur (40) en fonction de leur association aux zones partielles (30A, 30B, 32A, 32B).

4. Capteur photoélectrique à triangulation selon l'une des revendications précédentes,
**caractérisé en ce que**
les éléments d'imagerie (22A, 22B) sont conçus de telle sorte que le diamètre des différents spots lumineux (36A, 36B) qu'ils produisent sur le récepteur de lumière (24) est plus petit dans la direction de triangulation (T) que dans la direction orthogonale à celle-ci.
